(19) **Europäisches Patentamt**

**European Patent Office**

**Office européen des brevets**

(11) Veröffentlichungsnummer : **0 535 023 B1**

(12) **EUROPÄISCHE PATENTSCHRIFT**

(45) Veröffentlichungstag der Patentschrift :
**10.08.94 Patentblatt 94/32**

(21) Anmeldenummer : **91910544.5**

(22) Anmeldetag : **08.06.91**

(86) Internationale Anmeldenummer :
**PCT/EP91/01074**

(87) Internationale Veröffentlichungsnummer :
**WO 92/00332 09.01.92 Gazette 92/02**

(51) Int. Cl.⁵ : **C08F 4/654, C08F 10/00**

(54) **VERFAHREN ZUR HERSTELLUNG EINES POLYOLEFINS.**

(30) Priorität : **22.06.90 DE 4019925**

(43) Veröffentlichungstag der Anmeldung :
**07.04.93 Patentblatt 93/14**

(45) Bekanntmachung des Hinweises auf die
Patenterteilung :
**10.08.94 Patentblatt 94/32**

(84) Benannte Vertragsstaaten :
**AT BE CH DE DK ES FR GB IT LI LU NL SE**

(56) Entgegenhaltungen :
**EP-A- 0 015 048**
**EP-A- 0 249 869**

(73) Patentinhaber : **HOECHST
AKTIENGESELLSCHAFT
D-65926 Frankfurt (DE)**

(72) Erfinder : **THUM, Gerhard
Ginsterweg 10
D-6238 Hofheim (DE)**

## Beschreibung

Die vorliegende Erfindung betrifft ein Verfahren zur Herstellung eines Polyethylens mit kugelförmigen Teilchen mittels eines hochaktiven, kugelförmigen Ziegler Katalysators, mit welchem erhebliche Vereinfachungen und Vorteile bei der Handhabung und Verarbeitung der Produkte erzielt werden.

Es sind bereits eine Vielzahl von Katalysatoren des Ziegler-Typs zur Polymerisation von alpha-Olefinen bekannt. Viele dieser Katalysatoren basieren auf Magnesiumchlorid als Trägermaterial, das durch Umsetzung einer magnesiumorganischen Verbindung $R_2Mg$, wie z.B. Butylethylmagnesium, mit einer Chlorkohlenwasserstoffverbindung R'-Cl, wie z.B. Tetrachlorkohlenstoff, erhalten wird (vgl. US-A- 4 442 225, US-A- 4 439 539, DE-A- 30 10 202).

Dabei ist es jedoch nicht möglich, ein Magnesiumchlorid mit kugelförmiger Gestalt zu erhalten.

Andererseits ist es bekannt, daß rundes Magnesiumchlorid bei der Umsetzung einer magnesiumorganischen Verbindung $R_2Mg$ mit einer chlororganischen Verbindung R'-Cl in Gegenwart einer aluminiumorganischen Verbindung, wie Triethylaluminium, und einer Elektronendonorverbindung, wie Diisoamylether entsteht (vgl. EP-A- 00 99284).

Einschränkend gilt hierbei, daß R' ein Kohlenwasserstoffrest mit drei oder mehr C-Atomen sein muß und daß das dem Chlor benachbarte Kohlenstoffatom entweder ein sekundäres oder tertiäres C-Atom sein muß.

Bekannt ist ein Verfahren zur Herstellung eines Polyolefins durch Polymerisation von alpha-Olefinen in Gegenwart eines Katalysators, dessen Übergangsmetallkomponente A entstanden ist durch

a) Umsetzung einer magnesiumorganischen Verbindung der Formel $R^1MgR^2$ mit einer aluminiumorganischen Verbindung der Formel $AlR^3n(OR^4)_{3-n}$ oder dem Umsetzungsprodukt von Aluminiumtrialkylen oder Aluminiumdialkylhydriden mit Diolefinen, und einem aliphatischen primären Chlorkohlenwasserstoff,

b) Behandlung des erhaltenen Feststoffs mit einem Elektronendonor, und

c) Umsetzung des so erhaltenen Trägermaterials mit einer Verbindung des Titans oder Zirkoniums der Formel $MeX_m(OR^5)_{4-m}$ (vgl. DE-A-36 20 060).

Es wurde nun gefunden, daß ein hochaktiver und zugleich kugelförmiger Katalysator auf einfache Art und Weise herzustellen ist, mit welchem kugelförmige Polymerisate von Ethylen erhalten werden können, die sich durch eine enge Korngrößenverteilung bei gleichzeitig großem mittleren Korndurchmesser auszeichnen, wenn eine ganz spezielle Magnesiumverbindung verwendet wird.

Die Erfindung betrifft somit ein Verfahren zur Herstellung eines Polyethylens mit kugelförmigen Teilchen durch Polymerisation von Ethylen oder Copolymerisation von Ethylen mit einem alpha-Olefin mit 4 bis 10 Kohlenstoffatomen und einer oder mehreren Doppel-bindungen bei einer Temperatur von 50 bis 150°C und einem Druck von 1 bis 40 bar in Gegenwart eines Katalysators bestehend aus einer Übergangsmetall-komponente (Komponente A) und einer metallorganischen Verbindung (Komponente B), dessen Komponente A entstanden ist durch Umsetzung einer magnesiumorganischen Verbindung mit einem Elektronendonor, einer organischen Chlorverbindung und einer Übergangsmetallverbindung,

dadurch gekennzeichnet,

daß die Polymerisation durchgeführt wird in Gegenwart eines Katalysators, dessen kugelförmige Komponente A mit einem mittleren Teilchendurchmesser von 20 bis 110 $\mu$m und einem Verhältnis $D_m/D_n$ von kleiner 1,5 ohne Abtrennung von Zwischenprodukten hergestellt wurde durch

a) Umsetzung einer magnesiumorganischen Verbindung der Formel $[(n-C_4H_9)_{1,2-1,7}(n-C_8H_{17})_{0,3-0,8}Mg]$ in 0,5 bis 15 molarer Lösung mit einem aliphatischen Chlorkohlenwasserstoff in einer Menge von 0,5 bis 2,5 mol des Chlorkohlenwasserstoffs, bezogen auf 1 mol der magnesiumorganischen Verbindung, bei einer Temperatur von 30 bis 110°C,

b) Behandlung der so erhaltenen Suspension mit einem Elektronendonor in einer Menge von 0,1 bis 1 mol pro Grammatom des im Feststoff enthaltenen Magnesiums bei einer Temperatur von 0 bis 100°C, während 0,5 bis 3 Stunden,

c) Umsetzung des so erhaltenen Trägermaterials mit einer Verbindung der Formel $TiX_m(OR^1)_{4-m}$, worin $R^1$ ein Alkylrest mit 2 bis 10 Kohlenstoffatomen ist, X ein Halogenatom ist und m eine ganze Zahl von 0 bis 4 ist, in einer Menge von 0,5 bis 2 mol pro Grammatom des im Trägermaterial enthaltenen Magnesiums bei einer Temperatur von 30 bis 120°C und

d) Wäsche mit einem inerten Kohlenwasserstoff bei einer Temperatur von 0 bis 100°C.

Zunächst wird ein kugelförmiger Feststoff gebildet. Dazu wird eine magnesiumorganische Verbindung mit einem aliphatischen primären Chlorkohlenwasserstoff umgesetzt.

Die magnesiumorganische Verbindung ist ein Magnesiumdialkyl der Formel $[n-C_4H_9)_{1,2-1,7}(n-C_8H_{17})_{0,3-0,8}Mg]$, insbesondere $[(n-C_4H_9H)_{1,5}(n-C_8H_{17})_{0,5}Mg]$.

Als aliphatischer primärer Chlorkohlenwasserstoff geeignet ist beispielsweise Tetrachlorkohlenstoff, Chloroform, Methylenchlorid, 1-Chlorpropan oder 1,1,1-Trichlorethan, wobei auch Gemische eingesetzt wer-

EP 0 535 023 B1

den können. Bevorzugt verwendet werden Chloroform und Tetrachlorkohlenstoff.

Zur Darstellung des kugelförmigen Feststoffs wird die magnesiumorganische Verbindung in einem inerten, flüssigen Kohlenwasserstoff unter Stickstoff- oder Argonatmosphäre gelöst. Diese Lösung wird unter gleichmäßigem Rühren bei einer Temperatur von 30 bis 110°C, bevorzugt von 40 bis 80°C, mit einer Lösung des Chlorkohlenwasserstoffes zusammengebracht. Die Umsetzung kann in der Weise durchgeführt werden, daß man den Chlorkohlenwasserstoff zu der Lösung der magnesiumorganischen Verbindung in dem flüssigen Kohlenwasserstoff gibt, oder umgekehrt.

Bei dieser Umsetzung kann sowohl die Reaktionszeit als auch der Verdünnungsgrad der Reaktanten in weiten Grenzen variiert werden. Die Reaktionszeit beträgt 30 min bis zu mehreren Stunden, vorzugsweise 1 Stunde bis 5 Stunden. Die Reaktanten werden als 0,5 bis zu 15 molare Lösungen eingesetzt.

Der Ansatz enthält bis zu 2,5 mol, bevorzugt bis zu 2,0 mol des Chlorkohlenwasserstoffs, bezogen auf ein mol magnesiumorganische Verbindung.

Der entstehende suspendierte Feststoff besteht im wesentlichen aus kugelförmigem Magnesiumchlorid.

Zu dieser Suspension des kugelförmigen Feststoffes gibt man nun einen Elektronendonator. Geeignete Elektronendonatoren sind sauerstoffhaltige Verbindungen des Siliciums, des Phosphors oder des Schwefels, Stickstoff- oder Siliciumverbindungen mit Alkyl- oder Arylresten mit 1 bis 8 Kohlenstoffatomen, wie z.B. Triethylamin oder Hexamethyldisilan, oder aliphatische oder aromatische Ether mit gleichen oder unterschiedlichen organischen Resten.

Bevorzugt werden verwendet Diethylsulfit und Diethoxydimethylsilan.

Der Elektronendonator wird im Molverhältnis 0,1 bis 1, bevorzugt 0,1 bis 0,6, bezogen auf ein Grammatom Magnesium, bei einer Temperatur von 0 bis 100°C, bevorzugt von 60 bis 90°C, zu dem kugelförmigen Feststoff gegeben.

Die Reaktionszeit beträgt in Abhängigkeit von der Reaktivität der Reaktanten 0,5 bis 3 Stunden, vorzugsweise bis zu 1 h.

Das auf diese Weise erhaltene kugelförmige Trägermaterial wird sofort unter Stickstoff- oder Argonatmosphäre umgesetzt mit einer Verbindung der Formel $TiX_m(OR^1)_{4-m}$, worin R ein Alkylrest mit 2 bis 10 Kohlenstoffatomen ist, X ein Halogenatom, bevorzugt Chlor ist, und m eine ganze Zahl von 0 bis 4, bevorzugt aber 2 oder 4 ist. Man kann ein Gemisch aus mehreren dieser Verbindungen einsetzen..

Bevorzugte Verbindungen sind z.B. $TiCl_4$, $TiCl_3(OEt)$, $TiCl_3(0\text{-}iPr)$, $TiCl_2(OEt)_2$, $TiCl_2(0\text{-}iPr)_2$, $TiCl_2(O\text{-}CH_2C_6H_5)_2$. Ganz besonders bevorzugt ist $TiCl_4$.

In der vorstehend beschriebenen Reaktion wird die Verbindung des Titans in einer Menge von 0,5 bis 2 mol, bevorzugt 0,8 bis 1,8 mol, insbesondere 1 mol, bezogen auf ein Grammatom Magnesium des kugelförmigen Trägermaterials, eingesetzt.

Die Reaktionstemperatur beträgt 30 bis 120°C, bevorzugt 60 bis 95°C, und die Reaktionszeit beträgt in Abhängigkeit von der geforderten Titanbelegung 30 min bis zu mehreren Stunden, bevorzugt 1 bis 2 Stunden.

Die auf diese Weise hergestellte Katalysatorkomponente A wird abschließend bei einer Temperatur von 0 bis 100°C, bevorzugt von 10 bis 50°C, durch wiederholtes Waschen mit einem inerten Kohlenwasserstoff von löslichen Verunreinigungen, wie Metall- oder Halogenverbindungen befreit.

Die erfindungsgemäß hergestellte Katalysatorkomponente A liegt in Form von kugelförmigen Teilchen vor, deren mittlerer Durchmesser 20 bis 110 μm, bevorzugt 40 bis 80 μm, beträgt und die ein Verhältnis von mittlerem Durchmesser in Masse, $D_m$, zu mittlerem Durchmesser in Zahl, $D_n$ von kleiner 1,5, vorzugsweise 1,01 bis 1,2 aufweisen.

Die Komponente A wird in Form einer Suspension in einem inerten Kohlenwasserstoff, oder aber nach Abtrennen des Suspensionsmittels trocken zur Polymerisation von Ethylen oder Copolymerisation von Ethylen mit einem alpha-Olefin mit 4 bis 10 Kohlenstoffatomen und einer oder mehreren Doppelbindungen eingesetzt, wie z.B. mit 1-Buten, Isobuten, 1-Hexen oder 1,3-Butadien.

Die Polymerisation kann sowohl kontinuierlich als auch diskontinuierlich in der Gasphase oder in gesättigten Kohlenwasserstoffen mit 3 bis 15 C-Atomen, wie z.B. Propan, Butanen, Pentanen, Hexanen, Heptanen, Cyclohexanen oder Gemischen derartiger Verbindungen durchgeführt werden.

Im allgemeinen wird zusätzlich noch Wasserstoff als Molmassenregler und als Komponente B (Cokatalysator) eine Aluminiumverbindung der Formel $AlR^2_pY_{3-p}$, worin p 1, 2 oder 3 und $R^2$ ein Alkyl- oder Arylrest mit 1 bis 20 C-Atomen, Y Wasserstoff, ein Halogenatom oder eine Alkoxy- oder Aryloxygruppe mit jeweils 1 bis 20 Kohlenstoffatomen ist, eingesetzt.

Beispiele sind halogenhaltige aluminiumorganische Verbindungen, wie Dialkylaluminiumhalogenide, Alkylaluminiumdihalogenide oder Alkylaluminiumsesquichloride, weiterhin Aluminiumtrialkyle oder Aluminiumalkylhydride, die allein oder im Gemisch eingesetzt werden können.

Bevorzugt werden Aluminiumtrialkyle, wie z.B. Aluminiumtriethyl oder Aluminiumtriisobutyl, verwendet.

Die Polymerisationstemperatur beträgt 50 bis 150°C, bevorzugt 50 bis 100°C, und der Druck 1 bis 40 bar,

3

vorzugsweise 3 bis 12 bar.

Die in dem erfindungsgemäßen Verfahren hergestellten Polymerisate und Copolymerisate zeichnen sich durch eine kompakte, gleichmäßige kugelförmige Gestalt mit einer sehr engen Körngrößenverteilung aus. Das Verhältnis von mittlerem Durchmesser in Masse, $D_m$, zu mittlerem Druchmesser in Zahl, $D_n$, ist kleiner 1,5, vorzugsweise von 1,02 bis 1,3. Das Verhältnis D/d liegt im Bereich von 1,05 bis 1,2. Der Durchmesser des Polymerkorns liegt im Bereich von 100 bis 1000 µm, vorzugsweise 300 bis 800 µm. Die Polymeren besitzen eine hohe Schüttdichte und eine ausgezeichnete Verarbeitbarkeit.

Ein weiterer Vorteil des erfindungsgemäßen Katalysators liegt in der hohen Kontaktaktivität, so daß nur sehr geringe Mengen des Katalysators für die Polymerisation notwendig sind. Dadurch müssen die Polymerisate auch keiner zusätzlichen Nachbehandlung, wie z.B. aufwendigen Wasch- oder Reinigungsoperationen, unterworfen werden. Weiterhin treten keine unerwünschten Verfärbungen des Produktes durcg Katalysatorreste auf, die häufig zu einer Beeinträchtigung der Lichtstabilität der Polymeren führen können.

Der Restgehalt an Titan bzw. Zirkonium in den erfindungsgemäß hergestellten Polymeren beträgt weniger als 5 ppm, häufig weniger als 3 ppm.

Vor allem aber werden durch die kugelförmige Gestalt und die damit verbundene sehr gute Rieselfähigkeit der Polymerisate und Copolymerisate erhebliche Vereinfachungen und Vorteile bei der Handhabung, Trocknung und Verarbeitung erzielt.

Die Erfindung wird nachfolgend durch die Beispiele näher erläutert.

Der Schmelzindex MFI (190/5) wurde nach DIN 53735 bei 190°C und bei einer Belastung von 5 kg bestimmt.

Das Verhältnis $D_m$ zu $D_n$ wurde nach NF X 11-630 vom Juni 1981 bestimmt:

$D_m = [\Sigma \, ni \, (Di)^3 \, Di]/[\Sigma \, ni \, (Di)^3]$

$D_n = [\Sigma \, ni \, Di]/\Sigma \, ni$

ni = Anzahl i der Proben gleichen Durchmessers

Di = Durchmesser der i-ten Probe

Die Korngrößenverteilung $D_m/D_n$ der Komponente A wurde mittels Bildanalyse ermittelt.

Die Korngrößenverteilung $D_m/D_n$ des Polymerisates wurde mittels Siebanalyse nach DIN 4188 ermittelt.

Beispiel 1

Zu 621 cm³ einer Lösung einer Magnesiumverbindung mit der ungefähren Zusammensetzung $[(nC_4H_9)_{1,5}(n\text{-}C_8H_{17})_{0,5}Mg]$, welche unter dem Namen BOMAG-A im Handel erhältlich ist, in Heptan (= 570 mmol Mg) wurden innerhalb von 90 min bei 70-80°C 55,3 cm³ (= 570 mmol) $CCl_4$ zusammen mit 500 cm³ Benzin (Sdp 100-120°C) gegeben. Anschließend wurde der Ansatz 120 min bei 85°C gerührt. Der helle, rotbraune, sphärische Feststoff wies ein Mg/Cl-Verhältnis von 1 zu 2,08 auf und konnte ohne weitere Aufarbeitung als Katalysatorträger eingesetzt werden.

Beispiel 2

200 cm³ Benzin (Sdp 100-120°C) und 98 cm³ $CHCl_3$ (= 1210 mmol) wurden bei 70-75°C innerhalb von 90 min mit 656 cm³ einer Lösung von der in Beispiel 1 genannten Mg-Verbindung in Heptan (= 570 mmol Mg) versetzt und anschließend noch 120 min bei 75-77°C gerührt. Der hellbraune, sphärische Feststoff wies ein Mg/Cl-Verhältnis von 1:1,97 auf.

Beispiel 3

Ein Teil der in Beispiel 2 hergestellten $MgCl_2$-Suspension (= 306 mmol Mg) wurde bei 82-84°C innerhalb von 10 min mit 17,2 cm³ (= 135 mmol) Diethylsulfit versetzt und anschließend 60 min bei 84-85°C gerührt. Danach wurden 33,7 cm³ (= 306 mmol) $TiCl_4$ während 20 min bei 85°C zugetropft und der Ansatz nochmals 120 min bei 85-88°C gerührt. Der violette, kugelförmige Katalysatorfeststoff wurde 8 mal mit insgesamt 1300 cm³ Benzin (Sdp 100-120°C) bei 55°C gewaschen.

Mg : Ti : Cl = 1 : 0,085 : 2,10

$d_{50} = 55$ µm; $D_m/D_n = 1,18$.

Beispiel 4

Die in Beispiel 1 erhaltene $MgCl_2$-Suspension (= 570 mmol Mg) wurde bei 85°C innerhalb von 5 min mit 31,9 cm³ 250 mmol) Diethylsulfit versetzt und anschließend 60 min bei 85°C gerührt. Zu der dunkelbraunen Suspension wurden bei 85°C innerhalb von 20 min 62,8 cm³ (= 570 mmol) TiCl$_4$ zugegeben und der Ansatz 120 min bei 95°C gerührt. Der dunkelviolette Katalysatorfeststoff wurde anschließend bei 60°C 8mal mit je 150 cm³ Benzin (Sdp 100-120°C) Titan-frei gewaschen.

Mg : Ti : Cl = 1 : 0,130 : 2,28

d$_{50}$ = 60 µm; D$_m$/D$_n$ = 1,12.

Beispiel 5

Man verfuhr analog Beispiel 3, jedoch wurden statt 135 mmol Diethylsulfit 92 mmol Di-n-butylether eingesetzt.

Mg : Ti : Cl = 1 : 0,008: 1,95

d$_{50}$ = 50 µm; D$_m$/D$_n$ = 1,15.

Beispiel 6

Man verfuhr analog Beispiel 4, jedoch wurde statt Diethylsulfit Diethoxydimethylsilan eingesetzt.

Mg : Ti : Cl = 1 :0,06 : 2,11.

d$_{50}$ = 45 µm; D$_m$/D$_n$ = 1,17.

Beispiele 7-14

Die Ethylenpolymerisation wurde entsprechend der Tabelle in einem 1,5 dm³-Stahlautoklaven bei einer Temperatur von 85°C und einem Druck von 7 bar in 800 cm³ Benzin (Sdp 100-120°C) durchgeführt. Als Komponente B wurden jeweils 3,0 mmol Triethylaluminium (TEA) oder Triisobutylaluminium (TIBA) zugesetzt. Das kugelförmige Polyethylen-Korn hatte ein D/d-Verhältnis zwischen 1,1 und 1,3. Der Feinanteil < 100 µm betrug < 0,1 %.

Tabelle: Ethylenpolymerisation

| Bsp. | Komp.A n. Bsp. | Komp.B | H$_2$ Vol-% | Ausbeute g PE/mmol Ti | MFI 190/5 g/10 min | d$_{50}$ µm | SD g/l |
|------|------|------|------|------|------|------|------|
| 7 | 3 | TEA | 55 | 14 580 | 22,5 | 520 | 395 |
| 8 | 3 | TIBA | 45 | 18 980 | 6,8 | 585 | 360 |
| 9 | 3 | TIBA | 55 | 10 110 | 22,0 | 475 | 390 |
| 10 | 4 | TIBA | 45 | 14 040 | 4,3 | 380 | 330 |
| 11 | 4 | TEA | 55 | 17 320 | 20,0 | 360 | 335 |
| 12 | 4 | TEA | 45 | 20 425 | 5,5 | 430 | 345 |
| 13 | 5 | TIBA | 45 | 41 435 | 7,0 | 390 | 340 |
| 14 | 6 | TEA | 55 | 23 890 | 26,1 | 435 | 355 |

**Patentansprüche**

1. Verfahren zur Herstellung eines Polyethylens mit kugelförmigen Teilchen durch Polymerisation von Ethylen oder Copolymerisation von Ethylen mit einem alpha-Olefin mit 4 bis 10 Kohlenstoffatomen und einer oder mehreren Doppelbindungen bei einer Temperatur von 50 bis 150°C und einem Druck von 1 bis 40 bar in Gegenwart eines Katalysators bestehend aus einer Übergangsmetallkomponente (Komponente A) und einer metallorganischen Verbindung (Komponente B), dessen Komponente A entstanden ist durch Umsetzung einer magnesiumorganischen Verbindung mit einem Elektronendonator, einer organischen Chlorverbindung und einer Übergangsmetallverbindung,

dadurch gekennzeichnet,

daß die Polymerisation durchgeführt wird in Gegenwart eines Katalysators, dessen kugelförmige Komponente A mit einem mittleren Teilchendurchmesser von 20 bis 110 $\mu$m und einem Verhältnis $D_m/D_n$ von kleiner 1,5 ohne Abtrennung von Zwischenprodukten hergestellt wurde durch

    a) Umsetzung einer magnesiumorganischen Verbindung der Formel $[(n\text{-}C_4H_9)_{1,2\text{-}1,7}(n\text{-}C_8H_{17})_{0,3\text{-}0,8}Mg]$ in 0,5 bis 15 molarer Lösung mit einem aliphatischen Chlorkohlenwasserstoff in einer Menge von 0,5 bis 2,5 mol des Chlorkohlenwasserstoffs, bezogen auf 1 mol der magnesiumorganischen Verbindung, bei einer Temperatur von 30 bis 110°C,

    b) Behandlung der so erhaltenen Suspension mit einem Elektronendonator in einer Menge von 0,1 bis 1 mol pro Grammatom des im Feststoff enthaltenen Magnesiums bei einer Temperatur von 0 bis 100°C, während 0,5 bis 3 Stunden,

    c) Umsetzung des so erhaltenen Trägermaterials mit einer Verbindung der Formel $TiX_m(OR^1)_{4\text{-}m}$, worin $R^1$ ein Alkylrest mit 2 bis 10 Kohlenstoffatomen ist, X ein Halogenatom ist und m eine ganze Zahl von 0 bis 4 ist, in einer Menge von 0,5 bis 2 mol pro Grammatom des im Trägermaterial enthaltenen Magnesiums bei einer Temperatur von 30 bis 120°C und

    d) Wäsche mit einem inerten Kohlenwasserstoff bei einer Temperatur von 0 bis 100°C.

2.    Verfahren nach Anspruch 1, dadurch gekennzeichnet, daß als Elektronendonator Diethylsulfit oder Diethoxydimethylsilan eingesetzt wird.

3.    Verfahren nach Anspruch 1, dadurch gekennzeichnet, daß $TiCl_4$ eingesetzt wurde.


## Claims

1.    A process for the preparation of a polyethylene having spherical particles by polymerization of ethylene or copolymerization of ethylene and an alpha-olefin having 4 to 10 carbon atoms and one or more double bonds at a temperature of 50 to 150°C and a pressure of 1 to 40 bar in the presence of a catalyst composed of a transition metal component (component A) and an organometallic compound (component B), component A of which has been formed by reaction of an organomagnesium compound with an electron donor, an organic chlorine compound and a transition metal compound, wherein the polymerization is carried out in the presence of a catalyst of which spherical component A, having an average particle diameter of 20 to 110 $\mu$m and a ratio $D_m/D_n$ of less than 1.5, has been prepared, without separating off intermediates, by

    a) reaction of an organomagnesium compound of the formula $[(n\text{-}C_4H_9)_{1,2\text{-}1,7}(n\text{-}C_8H_{17})_{0,3\text{-}0,8}Mg]$ in 0.5 to 15 molar solution with an aliphatic chlorinated hydrocarbon in an amount of 0.5 to 2.5 mol of the chlorinated hydrocarbon, based on 1 mol of the organomagnesium compound, at a temperature of 30 to 110°C,

    b) treatment of the resulting suspension with an electron donor in an amount of 0.1 to 1 mol per gram atom of magnesium contained in the solid at a temperature of 0 to 100°C, for 0.5 to 3 hours,

    c) reaction of the support material thus obtained with a compound of the formula $TiX_m(OR^1)_{4\text{-}m}$, in which $R^1$ is an alkyl radical having 2 to 10 carbon atoms, X is a halogen atom and m is an integer from 0 to 4, in an amount of 0.5 to 2 mol per gram atom of magnesium contained in the support material, at a temperature of 30 to 120°C, and

    d) washing with an inert hydrocarbon at a temperature of 0 to 100°C.

2.    The process as claimed in claim 1, wherein the electron donor employed is diethyl sulfite or diethoxydimethylsilane.

3.    The process as claimed in claim 1, wherein $TiCl_4$ has been employed.

**Revendications**

1. Procédé pour la préparation d'un polyéthylène à particules sphériques par polymérisation de l'éthylène ou par copolymérisation de l'éthylène avec une α-oléfine comportant de 4 à 10 atomes de carbone et une ou plusieurs doubles liaisons, à une température de 50 à 150°C et à une pression de 1 à 40 bars, en présence d'un catalyseur composé d'un composant à base de métal de transition (composant A) et d'un composé organométallique (composant B), dont le composant A est formé par réaction d'un composé d'organomagnésium avec un donneur d'électrons, d'un composé organique chloré et d'un composé de métal de transition,

caractérisé

en ce qu'on effectue la polymérisation en présence d'un catalyseur, dont le composant A sphérique est préparé avec une granulométrie moyenne 20 à 110 μm et un rapport $D_m/D_n$ inférieur à 1,5 sans séparation des produits intermédiaires, par

a) réaction d'un composé organomagnésien de formule $[(n-C_4H_9)_{1,2-1,7}(n-C_8H_{17})_{0,3-0,8}Mg]$ en solution 0,5 à 15 molaire avec un hydrocarbone chloré aliphatique en une quantité de 0,5 à 2,5 moles d'hydrocarbone chloré, par rapport à 1 mole de composé organomagnésien, à une température de 30 à 110°C,

b) traitement de la suspension ainsi obtenue avec un donneur d'électrons en une quantité de 0,1 à 1 mole par gramme-atomes de magnésium contenu dans la matière solide, à une température de 0 à 100°C, pendant 0,5 à 3 heures,

c) réaction du matériau-support ainsi obtenu avec un composé de formule $TiX_m(OR^1)_{4-m}$ dans laquelle $R^1$ représente un radical alkyle comportant de 2 à 10 atomes de carbone, X représente un atome d'halogène et m un nombre entier de 0 à 4, en une quantité de 0,5 à 2 moles par gramme-atomes de magnésium contenu dans le matériau-support, à une température de 30 à 120°C, et

d) lavage avec un hydrocarbone inerte à une température de 0 à 100°C.

2. Procédé selon la revendication 1, caractérisé en ce qu'on utilise en tant que donneur d'électrons le sulfite de diéthyle ou le diéthoxydiméthylsilane.

3. Procédé selon la revendication 1, caractérisé en ce qu'on utilise le $TiCl_4$.